Europäisches Patentamt

European Patent Office

Office européen des brevets

(19)

(11) **EP 1 156 455 A2**

(12) **EUROPEAN PATENT APPLICATION**

(43) Date of publication:
21.11.2001 Bulletin 2001/47

(51) Int Cl.⁷: **G06T 15/20**

(21) Application number: **01111763.7**

(22) Date of filing: **15.05.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **16.05.2000 US 204539 P**

(71) Applicant: **Square Co., Ltd.**
**Tokyo 153-8688 (JP)**

(72) Inventor: **Yoshinari, Tatsuya**
**Honolulu, HI 96813 (US)**

(74) Representative: **Grünecker, Kinkeldey,**
**Stockmair & Schwanhäusser Anwaltssozietät**
**Maximilianstrasse 58**
**80538 München (DE)**

(54) **Fog visual effect rendering method**

(57)    A method of computer graphics rendering of a fog visual effect divides polygons representing an object in a scene into those above and below the fog. If the polygons of the object extend above the fog, no fog coloring is applied to the polygons. If the polygons are inside or below the fog, the fog coloring is blended in relationship to the distance from the viewpoint in the scene. By using this method, very realistic fog visual effects can be achieved, and the computation and drawing cost is minimized.

FIG. 2

EP 1 156 455 A2

**Description**

This U.S patent application claims the priority of U.S. Provisional Application 60/204,539 filed on May 16, 2000, of the same title, and by the same inventor.

FIELD OF THE INVENTION

This invention relates to a method for computer graphics rendering of a fog visual effect in a three-dimensional scene on a computer display and, particularly, to one in which the fog visual effect varies with the viewpoint of the scene.

BACKGROUND OF THE INVENTION

Interactive computer games are played on PCs and game consoles by generating scenes by computer graphics rendering techniques and using inputs from a game player on input devices to control the action displayed in the scenes. In general, computer graphics rendering involves computing the color and luminosity of each pixel in a final, displayed scene. Part of this computation depends on what lighting is used in the scene and how objects in the scene reflect or absorb that light. For example, an ocean scene may have a different color on a bright, sunny day than it does on a gray, cloudy day. The presence of sunlight or clouds determines whether you see the ocean as bright turquoise or murky gray-green.

The rendering of light from light sources, including those which are absorbed or reflected by surfaces in a scene, involves approximating the light sources by the amount of component light (red, green, and blue light) they emit and/or the percentage of the incoming light they reflect in various directions. In general, four types of light sources are modeled: emitted, ambient, diffuse, and specular. All four components are computed independently, and then added together. Emitted light originates from an object and is unaffected by any other light sources. Ambient light is from a source that has been scattered so much by the environment that it seems to come from all directions. Diffuse light scatters from a surface equally in all directions, so it appears equally bright, no matter where the eye is located. Finally, specular light comes from a particular direction, and tends to bounce off the surface in a preferred direction. Although a light source delivers a single distribution of frequencies, the ambient, diffuse, and specular components might be different.

When displaying a perspective, look-down type of scene in an interactive 3D game (such as in role-playing and flight simulation games), having parts of the ground covered in fog and being able to see ground features in ways that vary with the viewer's distance from the fog and the thickness of the fog can create a very impressive and realistic visual effect. In the natural world, when the viewer is far above a fog layer, objects beneath the fog all appear to be partially or wholly occluded (colored) by the fog. However, when the viewpoint is close to the fog layer, objects appear to be colored to a different degree, depending on their distance from the viewer, representing in part the thickness of the fog. The fog coloring also depends on whether the viewer is within the fog or below the fog.

One well-known method of achieving a fog effect in 3D graphics is to compute the distance from the viewpoint of the viewer of the scene to each of the vertices of the polygons constituting the world map of the scene, and then blend the fog color in proportion to the distance. This is a standard light modeling technique which is described, for example, in "OpenGL Programming Guide", 3rd Edition, Chapter 6, on "Lighting". However, using this method alone results in the fog color being applied to all polygons, thus giving a "blocky" fog effect which does not vary with the thickness of the fog or the viewer's position from or within the fog.

Another proposed method to achieve a fog effect is to compute the depth map for the scene with a translucent polygon positioned on the upper boundary of the fog. However, this will not give the appearance of changing the fog depth based on distance from the viewer, and the fog depth would appear to be uniform. The same approach would also not work when the viewpoint is within the fog. This approach may be modified by drawing several translucent polygons layered on top of each layer in order to change the fog depth with distance. However, this would result in visible boundaries appearing unnaturally at each layer, and would be computationally intensive, especially for large areas, since many large polygons will have to be drawn on top of each other. The translucent polygons will also have to be positioned such that the polygon planes are perpendicular to the camera angle vector of the viewpoint, such that the data for the translucent polygons would have to be regenerated whenever the camera angle moves.

SUMMARY OF THE INVENTION

Accordingly, it is a principal object of the present invention to provide a method of rendering a fog visual effect in which ground features are colored by the fog in ways that vary realistically with the viewer's distance from the fog and the thickness of the fog. It is a particular object of the invention that the fog rendering method be fast and computationally easy to achieve so that it can be used in interactive 3D games played on a PC or game console.

In accordance with the present invention, a method of computer graphics rendering of a fog visual effect divides polygons representing an object in a scene into those above and below the fog. If the polygons of the object extend above the fog, no fog coloring is applied to the polygons. If the polygons are inside or below the fog, the fog coloring is blended in relationship to the distance of the polygon from the viewpoint in the scene. By using this method, very realistic fog visual effects can be achieved, and the computation and drawing cost is minimized.

Other objects, features, and advantages of the present invention will be described in further detail below, with reference to the following drawings:

BRIEF DESCRIPTION OF DRAWINGS

FIGS. 1A and 1B are schematic diagrams illustrating the operational concept of the invention as applied when the viewpoint of a scene is above or within a fog.

FIG. 2 is a diagram illustrating the blending of fog color with the color of objects in a scene depending upon distance from the viewpoint.

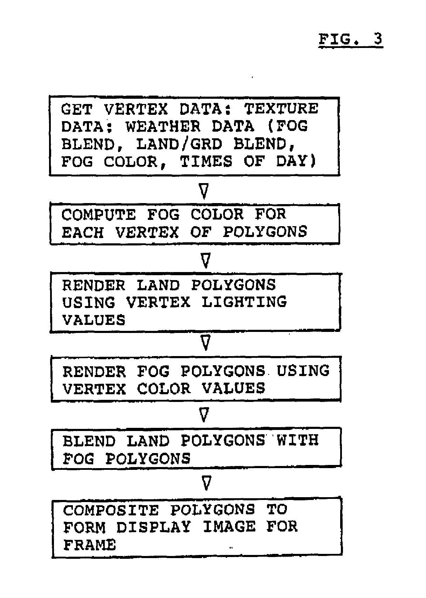

FIG. 3 is a flow chart illustrating the computational steps in the applied method.

DETAILED DESCRIPTION OF INVENTION

In the following description, the fog visual effect rendering method of the invention is explained with respect to the computer graphics rendering functions that are typically used in an advanced PC or game console. An example of an advanced game console is the PlayStation2™ or "PS2" game console offered by Sony Corp., of San Jose, California, which can generate realistic three-dimensional (3D) scenes "on-the-fly" (in real-time) from data representing objects in a scene. The advanced game console employs a software command layer with a limited number of rendering routines which are executed through high-speed 3D image processing and rendering hardware. In contrast to the CPU of a typical PC which is designed to perform a wide variety of functions, the processing core of the PS2 is a combination of CPU and DSP processor whose main function is simulating 3D worlds extremely fast and well. The DSP processor takes in massive amounts of input data and performs repetitive, loop-based calculations on it to produce massive amounts of output data. Speed and bandwidth are of the essence in digital signal processing. A Graphics Synthesizer (GS) on the PS2 takes display lists generated by the processor core and renders the display images. A typical display list contains commands to draw the vertices of elemental polygons constituting the world map of a scene, shade the faces of the polygons, then render bitmaps of the polygons and composite them into the overall display image of the scene.

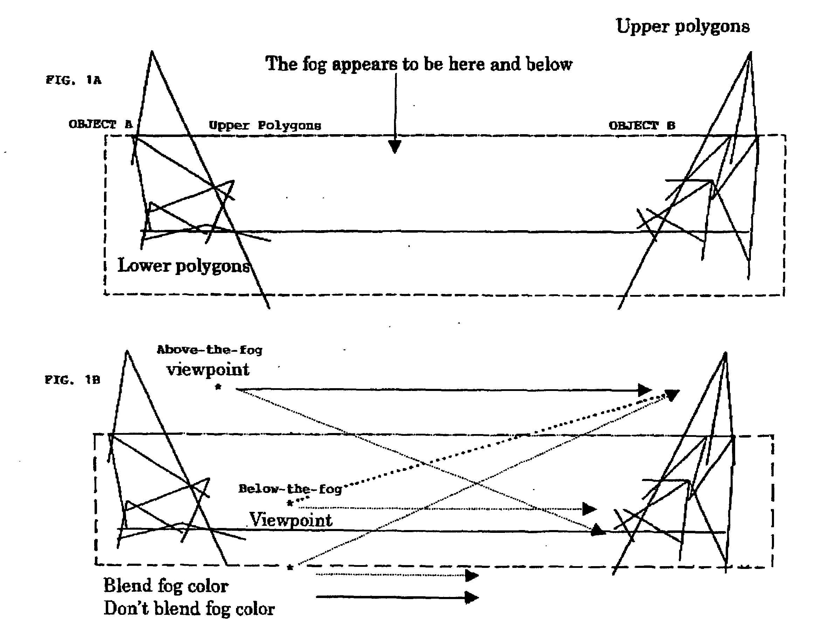

Referring to FIG. 1A, Objects A and B are shown appearing in a scene with a fog. Parts of the Objects appearing above the fog upper boundary are labeled Upper Polygons, while parts of the Objects appearing within the fog are labeled Lower Polygons. In FIG. 1B, the invention method first requires an On/Off decision whether the viewpoint of the viewer in the scene is above or within the fog. If the viewpoint is Above-the-Fog, then the view of parts of the Objects extending above the fog are not blended with fog color (solid lines), while the view of parts of the Objects within and below the fog are blended with fog color (dotted lines). On the other hand, if the viewpoint is Within-the-Fog, then the view of the parts of the Objects extending above the fog are blended with fog color, as well as those within and below the fog (dotted lines).

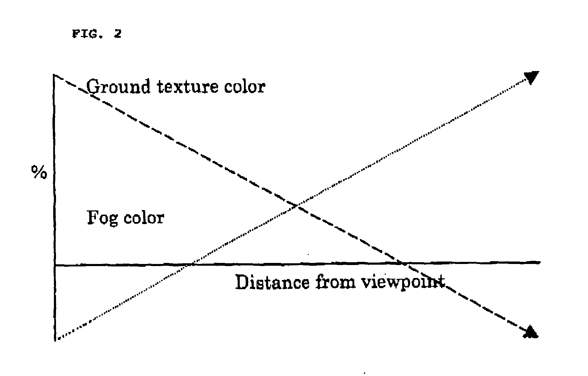

In FIG. 2, color blending of the fog color with an object is illustrated, using the ground as the object for simplicity (an object's color would be more complex for an object that was characterized by spectral light). The fog color is typically white. In the simplest mode, the fog color (represented by the dotted line) is blended with the ground texture color (represented by the dashed line) in direct linear proportion to the distance of the object (or part of the object) from the viewpoint. Thus, if the viewpoint is close to the ground, the ground would be colored with a blend of a high percentage of ground texture color and a low percentage of fog color. Conversely, if the viewpoint is far above the ground, the ground would be colored with a blend of a low percentage of ground texture color and a high percentage of fog color. This blending achieves the effect of varying the fog coloring of the object according to the thickness of the fog between the viewpoint and the object.

The blending of fog color may also be made dependent upon different time of the day, for example, daytime, sundown, and night. This is implemented by changing the fog color for each time of day, and blending the respective fog color with the world map polygons of the object as described above.

It is also possible to apply this rendering method to other scene environments in which objects are immersed in a boundary of different physical material, for example, objects appearing underwater. This can be achieved by using a material color, such as a blue color simulating water. Then, when the On/Off decision and color blending steps are applied, a similar visual effect on the appearance of the objects in the immersive material is achieved.

Referring to **FIG, 3,** the computational steps in carrying out the rendering of the fog visual effect will now be described. Unless otherwise noted, all variables take on a value between 0.0 and 1.0. A world map of a scene typically consists of the following data:

Vertex Data: This represents a set of polygons that comprise the 3D world map. Each polygon is defined by three vertices (represented by x,y,z coordinates) and a normal vector representing the directional orientation of the polygon face.

Texture Data: This is composed of the actual texture map image and the mapping data between each of the vertices of the polygons to the texture UV coordinates.

Weather Data: The following data are to be defined for each region of the world map and the time of day.
$G_{up}$, the fog blend factor above the fog
$G_{down}$, the fog blend factor within the fog
$T_{up}$, the land/ground blend factor above the fog
$T_{down}$, the land/ground blend factor inside the fog
$FOG_{up}$, the fog color above the fog, defined by the R, G, and B components
$FOG_{down}$, the fog color inside the fog, defined by the R, G, and B components

Times of day: daytime; sundown/sunrise; nighttime

By interpolating between these values, it is possible to create a transition effect between regions and times of day. For each display frame of the scene, the fog blend factors are scaled by $y_w$, which is a parameter that varies from 1.0 to 0.0 depending on the vertical axis coordinate of the viewpoint in world coordinates:

$$G_{up} = G_{up} * y_w$$

$$G_{down} = G_{down} * y_w$$

$$T_{up} = T_{up} * y_w$$

$$T_{down} = T_{down} * y_w$$

This step creates the effect of increasing the contribution of fog color as the viewpoint moves up.

The fog color for each vertex of a polygon is then computed using the following sequence of steps:

1. Get the X,Y,Z coordinates (in world coordinates) of the three vertices of the polygon.
2. Apply a screen space transformation of the vertices to screen coordinates.
3. Save the X,Y,Z coordinates (in screen coordinates) of the three vertices of the polygon.
4. Get the normal vectors of the vertices.
5. Compute the light intensities L1, L2, L3 for the three vertices based on the normal vectors.
The light intensities can be computed by taking the dot product of the light and normal vectors (i.e., standard Lambert diffuse lighting).
6. Let: $G = G_{up}$ if the polygon is above the fog, $G_{down}$ otherwise
7. Let: $T = T_{up}$ if the polygon is above the fog, $T_{down}$ otherwise
8. Let: $FOG = FOG_{up}$ if the polygon is above the fog, $FOG_{down}$ otherwise
9. Modify the lighting values of the land texture and the fog color such that the land texture will be darker as it gets farther away from the viewpoint, and the fog color deeper, using the following computation:
10.
$Fog_T$ is the final fog blend factor for the land polygon
$Fog_G$ is the final fog blend factor for the fog polygon
$z_s$ is the Z coordinate of the vertex in screen coordinates, where $z_s$ is 0.0 at the surface of the screen and increases with distance

Let: $Fog_T = z_s + T$

Clamp $Fog_T$ so that its value falls between 0.0 and 1.0.

Let: $L_v = L_v * (1 - Fog_T)$; save $L_v$ as the final land lighting value of the vertex.
     This darkens the land lighting with distance.

Let: $Fog_G = z_s + G$

Clamp $Fog_G$ so that its value falls between 0.0 and 1.0.

Let: $FOG_v = FOG * Fog_G$; save $FOG_v$ as the final fog color value of the vertex.
     This darkens the fog (increase the fog's contribution) with distance.

11. Repeat for all vertices.
12. Repeat for all polygons.

Once the lighting value computations are done, the polygons are rendered using the following steps:

1. Retrieve the saved X,Y,Z coordinates (in screen coordinates) of each vertex.
2. Apply backface culling (skip this polygon if polygon is facing away from the viewpoint).
3. Skip this polygon if the Z coordinate is behind the viewpoint (not in view).
4. Retrieve the saved fog color $FOG_v$ and land lighting value $L_v$ of the vertex.
5. Skip the rendering of the land if the land color is empty (the fog will completely occlude the land).
6. Skip the rendering of the fog if the fog color is empty (the fog will appear completely transparent).
7. Render the land polygon with texture using the vertex lighting values and the screen X,Y,Z coordinates.
8. Render the fog polygon using the vertex color values and the screen X,Y,Z coordinates, blending on top of the land polygon.
9. Repeat for all polygons.
10. Composite the polygons to form the scene display image for the frame.

In the above procedure, the polygons of a scene are rendered with texturing in the conventional way in a first rendering pass. Then the polygons are rendered in a second pass with fog color values, and the results of the two passes are combined together. The result is the addition of fog coloring to a scene that varies with the viewpoint distance (height Z) from an object, time of day, and whether the viewpoint is above or within the fog, thereby providing a much more realistic effect for fog scenes.
While the foregoing describes one basic approach to fog rendering according to the invention, other approaches, refinements, and parameter adjustments may be used depending on the computing power of the rendering machine, and to create other types of visual effects. A further discussion of some proposed improvements and parameter tweaking is provided in Appendix A.
It is understood that many other modifications and variations may be devised given the above description of the principles of the invention. It is intended that all such modifications and variations be considered as within the spirit and scope of this invention, as defined in the following claims.

## Appendix A

### Limitations of the fog drawing method

The fog drawing method is not physically correct. Ideally, the fog depth should be some function of the distance from the viewpoint to the vertex. In the method described, the fog depth is determined only by the height of the viewer and the screen space z coordinate of each polygon vertex. This means that the fog depth is the same for a point in the middle of the screen and a point on the edge of the screen, given the same screen space z coordinate.

The fog drawing method also assumes that the viewpoint is always above the entire scene to be rendered, looking down.

However, both of these limitations are limitations of this particular implementation. This decision was made based on the computation power available on the target machine (Sony Playstation) and the need to balance the available CPU time between landscape rendering and other computation. On hardware with more computational power or hardware support for fog, other rendering methods can be used. Many current graphics hardware that support the OpenGL API have accelerated hardware support for fog, for example.

### Limitations of dividing the scene into upper and lower regions

The method described determines whether a part of the landscape is above or below the fog on a per-vertex basis. When the polygons are drawn, the colors of the vertices are interpolated to create a smooth shading effect (standard Gouraud shading). This means that polygon edges may not cross the boundary line between the fogged and unfogged area. In other words, the landscape data must be physically split at the boundary.

If a polygon edge should cross the fog boundary, this would cause one vertex of the edge to be in the fog and the other to be outside the fog. When vertex colors are interpolated

between this edge, some points on this polygon will be shaded with the fog color, even though that point should be outside the fog.

This is not a problem as long as the fog boundary is static, since the landscape data can be split as a preprocessing step. This is a problem, however, if one wants to animate the boundary as a future improvement.

Many current 3D graphics hardware support the ability to program the shading of triangles on a per-pixel level. Such hardware may be used to enhance the fog rendering method to not require that landscape data to be split, and to support dynamic fog boundary. ·

Parameter tweaking

In the standard case, $G_{up}$ and $T_{up}$ are set to some low number (say 0.1), and $G_{down}$ and $T_{down}$ are set to some high number (say 0.6). $FOG_{up}$ and $FOG_{down}$ should usually be set to the same value, so as not to create a disparity in the fog color between the two areas of the landscape. This will create the effect of deep fog in the lower area, and some fog in the upper area.

Say the $G_{down}$ and $T_{down}$ parameters were animated over several frames of animation from this value to the value of $G_{up}$ and $T_{up}$. This would create the effect of a weather transition from a foggy day to a clear day. Changing parameters in this manner can be used to create other effects.

## Claims

1. A method of computer graphics rendcring of a fog visual effect as seen from a viewpoint defined for a display view of a scene containing a fog, comprising: (a) dividing polygons representing an object in a scene into those above and those below an upper boundary of the fog; (b) computing distances between the viewpoint defined in the display view of the scene from the polygons of the object in the scene; and (c) blending fog coloring applied to the polygons inside or below the upper boundary of the fog in relationship to the distance of the polygons of the object from the viewpoint in the scene.

2. A method in accordance with Claim 1, wherein the blending of fog coloring for each vertex of a polygon of the object is in a linear relationship to the distance of the vertex of the polygon of the object from the viewpoint.

3. A method in accordance with Claim 1, wherein the blending of fog coloring for each vertex of a polygon of the object is in a linear relationship to a vertical axis height of the viewpoint above the vertex of the polygon of the object.

4. A method in accordance with Claim I, wherein a pre-determined fog coloring is applied to the polygons above the upper boundary of the fog.

5. A method in accordance with Claim 4, wherein no fog coloring is applied to the polygons above the upper boundary of the fog;

**6.** A method in accordance with Claim 1, wherein weather data are defined for each region of a scene and the time of day.

**7.** A method in accordance with Claim 6, wherein the weather data comprises: $G_{up}$, a fog blend factor above the fog; $G_{down}$, a fog blend factor within the fog; $T_{up}$, a land/ground blend factor above the fog; $T_{down}$, a land/ground blend factor inside the fog; $FOG_{up}$, a fog color above the fog; and $FOG_{down}$, a fog color inside the fog.

**8.** A method in accordance with Claim 7, wherein the fog blend factors are scaled by $y_w$, a parameter that varies between 1.0 and 0.0 depending upon a vertical axis coordinate of the viewpoint above a ground level in the scene.

**9.** A method in accordance with Claim 1, wherein the polygons of the scene are rendered with texturing in a first rendering pass, then the polygons are rendered by blending fog color values in a second rendering pass, and the results of the two passes are combined together,

**10.** A method of computer graphics rendering of a visual effect of an object immersed in light-transparent physical matter as seen from a viewpoint defined for a display view of a scene comprising: (a) dividing polygons representing an object in the scene into those above and those below an upper boundary of the physical matter; (b) computing distances between the viewpoint defined in the display view of the scene from the polygons of the object in the scene; and (c) blending immersive coloring applied to the polygons inside or below the upper boundary of the physical matter in relationship to the distance of the polygons of the object from the viewpoint in the scene.

**11.** A method in accordance with Claim 10, wherein the blending of immersive coloring for each vertex of a polygon of the object is in a linear relationship to the distance of the vertex of the polygon of the object from the viewpoint.

**12.** A method in accordance with Claim 10, wherein the blending of immersive coloring for each vertex of a polygon of the object is in a linear relationship to a vertical axis height of the viewpoint above the vertex of the polygon of the object.

**13.** A method in accordance with Claim 12, wherein a pre-determined immersive coloring is applied to the polygons above the upper boundary of the physical matter.

**14.** A method in accordance with Claim 13, wherein no immersive coloring is applied to the polygons above the upper boundary of the physical matter.

**15.** A method in accordance with Claim 10, wherein the immersive matter is fog.

**16.** A method in accordance with Claim 10, wherein the immersive matter is water.

Upper polygons

The fog appears to be here and below

OBJECT B

Upper Polygons

Lower polygons

OBJECT A

FIG. 1A

Above-the-fog viewpoint

Below-the-fog viewpoint

Viewpoint

Blend fog color
Don't blend fog color

FIG. 1B

FIG. 2

FIG. 3

```
┌──────────────────────────────┐
│ GET VERTEX DATA: TEXTURE     │
│ DATA: WEATHER DATA (FOG      │
│ BLEND, LAND/GRD BLEND,       │
│ FOG COLOR, TIMES OF DAY)     │
└──────────────────────────────┘
              ▽
┌──────────────────────────────┐
│ COMPUTE FOG COLOR FOR        │
│ EACH VERTEX OF POLYGONS      │
└──────────────────────────────┘
              ▽
┌──────────────────────────────┐
│ RENDER LAND POLYGONS         │
│ USING VERTEX LIGHTING        │
│ VALUES                       │
└──────────────────────────────┘
              ▽
┌──────────────────────────────┐
│ RENDER FOG POLYGONS USING    │
│ VERTEX COLOR VALUES          │
└──────────────────────────────┘
              ▽
┌──────────────────────────────┐
│ BLEND LAND POLYGONS WITH     │
│ FOG POLYGONS                 │
└──────────────────────────────┘
              ▽
┌──────────────────────────────┐
│ COMPOSITE POLYGONS TO        │
│ FORM DISPLAY IMAGE FOR       │
│ FRAME                        │
└──────────────────────────────┘
```